# EUROPEAN PATENT SPECIFICATION

(11) **EP 3 587 803 B1**
(45) Date of publication and mention of the grant of the patent: **16.10.2024**
(21) Application number: 17877743.9
(22) Date of filing: 04.12.2017
(51) Int. Cl.: F03D 7/02, F03D 1/06, F03D 7/04

(54) **ENERGY CONVERTING APPARATUS, ENERGY CONVERTING SYSTEM INCLUDING SAME, AND OPERATING METHOD THEREOF**
ENERGIEUMWANDLUNGSVORRICHTUNG, ENERGIEUMWANDLUNGSSYSTEM DAMIT UND BETRIEBSVERFAHREN DAFÜR
APPAREIL DE CONVERSION D'ÉNERGIE, SYSTÈME DE CONVERSION D'ÉNERGIE LE COMPRENANT ET SON PROCÉDÉ DE FONCTIONNEMENT

(30) Priority: 08.12.2016 KR 20160167063; 15.12.2016 KR 20160171948
(43) Date of publication of application: 01.01.2020
(73) Proprietor: Cytroniq Co., Ltd., Cheonan-si, Chungcheongnam-do 31075 (KR)
(72) Inventor: LEE, Michael Myung Sub, Cheonan-si Chungcheongnam-do 31066 (KR)
(74) Representative: Isarpatent
(86) International application number: PCT/KR2017/014077
(87) International publication number: WO 2018/105969

(56) References cited:
- EP-A2- 2 128 385
- EP-A2- 2 222 955
- EP-A2- 2 650 531
- EP-B1- 2 222 955
- WO-A1-2005/095793
- KR-A- 20010 067 856
- KR-A- 20120 061 336
- KR-A- 20120 090 760
- KR-A- 20130 116 152
- US-A1- 2012 051 907
- US-A1- 2012 134 812
- US-A1- 2013 280 067

## Description

### Technology Field

The actual examples according to the concepts of the present invention relate to an energy conversion device, in particular, it refers to energy conversion system that includes energy conversion device and the operational method that is capable of changing three-dimensional shape of the turbine based on the control signal that is related to the generated measurement representative of the measurement results derived from measuring the reaction of the turbine when the fluid flow is applied to the turbine as an external force, and includes such energy conversion apparatus.

### Background Technology

Energy harvesting refers to technology that harvests energy by converting energy from natural energy sources such as wind, tidal, or wave power into electrical energy.

For example, wind power generators that convert wind energy into mechanical energy using devices such as wind turbines and using this energy to turn generators to generate electricity are widely used to generate electricity in many countries.

Controlling the blade of the wind generator in order to increase the electricity generated can increase the load weight and increasing the number of wind generators will decrease the wind force received by the wind generators.

Patent Literature US 2003/280067 A1 provides a method of controlling a wind turbine rotor blade comprising a pitch axis about which the blade can be pitched, and a flap movable to alter the aerodynamic profile of the blade. Patent Literature EP 2 222 955 A2 provides a wind turbine blade comprising a blade body and lift-regulating means adapted for movement in relation to the blade body by an actuation means controlled by an actuation controller, wherein the actuation controller controls a setting of the lift-regulating means based on an input from a sensor. Patent Literature EP 2 128 385 A2 a wind turbine comprising: an electrical generator; and a rotor coupled to the electrical generator, the rotor having a rotor blade, the rotor blade having an air deflector, the air deflector being movable between an extended position in which the air deflector extends outwardly from an exterior surface of the rotor blade. US2012051907 is another prior art example of a wind turbine blade.

### Detailed description of the invention

### Technical Challenge

The technical challenge to be resolved by this invention is in generating control signal that correspond to the response of the external pressure from the fluid flow by the turbine, and to create energy conversion device that can use the said control signal to convert the three-dimensional shape of the said turbine, and the operating method thereof.

The technical challenge to be resolved by this invention is in regard to the energy conversion system, in which it will provide technology to change the three-dimensional shape of the blades of the energy conversion devices using the locational information of the energy conversion devices, the terrain information of the energy conversion devices, and the weather information of the location of these devices.

### Problem Resolving Solution

According to the present invention, an energy conversion device for converting mechanical energy obtained from flowing fluids into electrical energy is provided, as defined by independent claim 1. Furthermore, claim 20 provides a method for converting mechanical energy obtained from flowing fluids into electrical energy.

It is possible as an actual example that, an energy conversion device for converting mechanical energy obtained from flowing fluids into electrical energy comprises of: a blade; a primary measuring device for primary measuring reaction of the blade when the fluid flow exerts an external force on the blade, and generating a measurement value corresponding to a measurement result; a controller configured to generate control signals using the primary value derived from responding to the above primary measured value output from the above primary measuring equipment; and an actuator configured to change the three-dimensional shape of the blade in response to the control signal output from the controller.

The above energy conversion device includes additional memory for storing computational fluid dynamics (CFD) program, wherein the controller generates control signal by using primary measured value through CFD program derived by running the CFD program stored in the memory.

As an actual example, an energy conversion device for converting mechanical energy obtained from flowing fluids into electrical energy comprises of: a blade; measuring devices for generating the measurements corresponding to the measured results of the responses of the blade and generating measured value corresponding to the measurement result when the fluid flow exerts an external force on the blade; memory for storing control values that correspond to a combination of primary values that represent the internal environment of the device and the secondary values that represent the external environment of the device; a controller configured to generate control signals in response to any one of the control values extracted from the memory output derived from the measurement devices and an actuator configured to change the three-dimensional shape of the blade in response to the control signal output from the controller.

As an actual example, a wind power generator is comprised of: a primary wind generator that includes a primary blade and a primary actuator; a secondary wind power generator including a secondary blade, a measuring device for measuring wind power to generate wind power values; a memory for storing control values; and a controller configured to generate control signal in response to the primary control value that are read from the primary control value among the control values from the memory in response to the wind power value output from the measuring device, and the aforementioned primary actuator that changes the three-dimensional shape of the primary blade in response to the control signal output from the controller.

As an actual example, a primary wind power generation system comprises of a primary generator with a primary blade and a primary actuator; a secondary wind power generator including a secondary blade; a memory for storing the control values; a receiver that receives at least one of the information of weather and terrain information around the primary wind power generator and the locational information of the secondary wind power generator; a controller that generates control signal in response to the primary control value that has been selected from the control values in the memory in response to the output of the receiver, and the primary actuator that changes the three-dimensional shape of the primary blade in response to the control signal output from the controller.

As an actual example, the method of operating the energy conversion device for converting mechanical energy obtained from flowing fluids into electrical energy, the following stages are included: a stage to generate measurement value equivalent to the measured result of the blade's response when the fluid flow is applied to the blade as an external force; a stage to generate control signal using the primary control value read from the control values stored in the memory that have been formed in response to the output measured values from the controller; and a stage where an actuator configured to change the three-dimensional shape of the blade in response to the control signal output from the controller.

Each of the control values stored in the memory has independent values according to at least one of the following information: weather information around the energy conversion device, terrain information of the location where the energy conversion device is installed, and locational information relative to the other energy conversion devices.

As an actual example, the method of operating the primary wind power generator comprised of a primary blade and a primary actuator, and secondary wind power generator system containing a secondary blade, the following stages are included; a stage to generate wind value by measuring the wind power; a stage where a control signal is generated using the primary value that are read from the stored memory that have been stored as a result of responding to the measured outputs; and a stage in which the three-dimensional shape of the primary blade has been changed from responding to the control signal output by the controller by the primary actuator.

The three-dimensional shape changing stage of the primary blade involves the three-dimensional shape changing of the primary blade by the actuator reacting to the control signal to control blade's pitch angle, open and closing of the leading edge of the primary blade or by controlling the open and closing of the trailing edge of the primary blade.

As an actual example, the method of operating the primary wind power generator comprised of a primary blade and a primary actuator, and secondary wind power generator system containing a secondary blade, the following stages are included; a stage to generate wind value by measuring the wind power; a stage where a control signal is generated using the primary value that are read from the stored memory that have been stored as a result of responding to the measured outputs; and a stage in which the three-dimensional shape of the primary blade has been changed from responding to the control signal output by the controller by the primary actuator.

The wind power generator's operating method further include a stage where the accrued power generated by the primary wind power generator is calculated; and a stage where the controller updates the control values according to the calculated accrued power generation.

### The Effects of the Invention

An energy conversion device according to embodiments of the present invention measures the response of the turbine to the fluid flow acting as an external force on the turbine, generates a measured value according to the measurement result, and has the effect of changing the three-dimensional shape of the turbine based on the measured value.

Therefore, the above energy conversion device has the effect of increasing energy conversion efficiency without greatly increasing the load weight of the energy conversion device.

The energy conversion device allows the three-dimensional shape change of the turbine using the location information of other energy conversion units in the vicinity to provide more fluid flow to the other energy conversion units after using it for its own generation, and therefore, it has the effect of increasing the efficiency of energy conversion of the other energy conversion units and the effect to decrease the distances between the energy conversion units in installation.

The energy conversion devices according to embodiment of this invention utilizes at least one of the information from the terrain, weather and locational information of other energy conversion units to change the three-dimensional shapes of each of the other turbines in order to effectually increasing the efficiency of the turbines in response to the environment of the energy conversion units' location.

### Brief Explanation of the Drawings

Drawing 1 is a block diagram of energy conversion units according to the actual examples of this invention.
Drawing 2 represents real examples of energy conversion units according to the drawing 1
Drawing 3 to 8 represents the real examples of control values and control subjects of drawing 1 or 2 stored in the memory
Drawing 9 represents an alternate real examples of energy conversion units according to the drawing 1
Drawing 10 is a systems diagram of energy conversion units according to the actual examples of this invention.
Drawing 11 represents the real examples of control values and control subjects of drawing 10 stored in the memory
Drawing 12 is a systems diagram of energy conversion units according to the actual examples of this invention.
Drawing 13 represents turbine structures of drawings 1, 2, 9, 10 or 12
Drawing 14 represents actual example of three-dimensional shape change of above turbine by controlling the leading edge of the turbine in drawing 1, 2, 9, 10 or 12
Drawing 15 represents actual example of three-dimensional shape change of above turbine by controlling the trailing edge of the turbine in drawing 1, 2, 9, 10 or 12
Drawing 16 is a flow chart explaining the operation of energy conversion units in the drawings 1, 2, or 9
Drawing 17 is a flow chart explaining the operation of energy conversion system in the drawings 10 or 12

### The shape for executing the invention

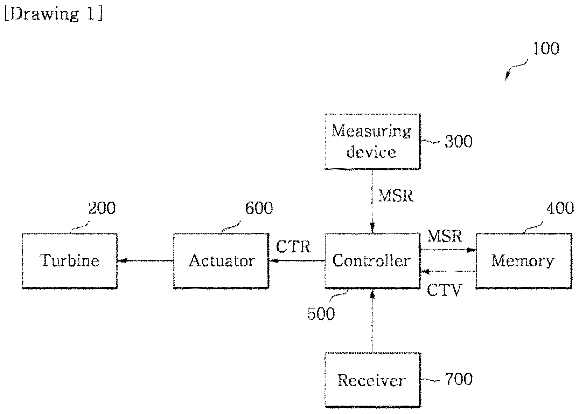

Drawing 1 is a block diagram of energy conversion units according to the actual examples of this invention. In reference to drawing 1, the energy conversion unit (100) may include at least one of measuring device (300), memory (400), controller (500), at least one of the actuators (600), and a receiver (700)

For example, energy conversion device (100) may represent devices capable of converting energy (for example, mechanical energy) obtained from fluid flow of liquid, gas, particles or solid body or solids to electric (for example, electrical energy) The fluid flow as specified in this statement can be broadly interpreted as a concept that includes the flow of liquid, fluid flow, or material flow.

The aforementioned fluid flow may represent the fluid (for example, solid, particle, liquid, plasma, and/or solid materials) in motion.

The aforementioned fluid flow from wind, tide, ocean or sea current, deep water or river water flow, water wave or wind wave, and the actual examples of energy conversion apparatus (100) may be representative of generators using wind or ocean energy, but does not limit to those generators. For example, the energy conversion apparatus (100) may be wind, current, or wave generators, but does not limit to them. In addition, the energy conversion apparatus (100) explained in this abstract may also apply to the geothermal energy generators. In addition, the technical theory to utilize three-dimensional shape change of the turbine (or blade) in this invention may be applicable to turbines (or blades) that are used to generate electricity.

The aforementioned wind power generators may be applicable for onshore type and offshore type wind power generators. The aforementioned wind power generators may apply to floating offshore wind power generators and semi-submersible floating wind power generators, but does not limit to them.

Wind power refers to electric power conversion of wind (or wind power) using wind turbines, tidal power refers to electric power generation using the difference between the ebb and flow of tidal power, and the waver power refers to transmission or generation of electrical energy using wind wave.

Turbine (200) may refer to rotary mechanical device capable of producing energy from fluid flow. Turbine (200) may refer to structure (or device) that can convert energy acquired from the aforementioned fluid flow as an external force on the turbine (200) to convert into electricity.

For real time example, turbine may refer to blade, turbine blade, rotor blade, wind turbine rotor blade, tidal turbine blade, or wind wave turbine blade. Energy conversion device (100) may include multiple turbines (or multiple blades). For example, turbine (or blade) may include vertical-axis wind turbine (VAWT) blade or horizontal axis wind turbine (HAWT) blade in its wide interpretation.

Measuring device (300) may generate measurement value (or reaction value) representative of measured results (for example direct or indirect measurement) of the response of turbine (or blade; 200) when fluid flow exerts external pressure to the turbine (or blade; 200)

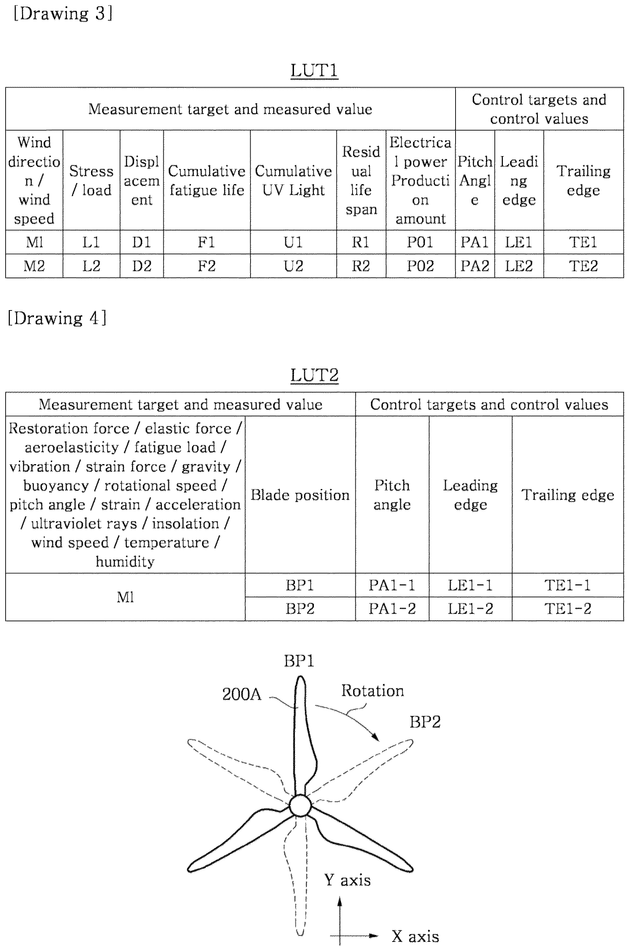

The aforementioned reaction or measured value may include at least one of the following: turbine (200) location (or rotational angle explained in drawing 4); restoring force of the turbine (200); elastic force of the turbine (200); aeroelasticity of turbine (200); turbine (200) fatigue; turbine (200) vibration; turbine (200) stress; turbine (200) gravity; turbine (200) buoyancy; rotational speed of turbine (200); turbine (200) RPM; turbine (200) pitch; rotation velocity of turbine (200); strain or strain rate of turbine (200); turbine (200) acceleration; ultraviolet rays of turbine (200); turbine (200) insolation; speed (or density) of the fluid; turbine (200) temperature; and turbine (200) humidity.

Measuring device (300) may represent measuring device (or sensor) capable or measuring the response of turbine (200) when fluid flow is applied as external force or device (or sensor) that can generate the aforementioned measured values. Measuring device (300) may include multiple measuring devices or sensors. For example, when measuring device includes primary and secondary measuring devices, the aforementioned primary measuring device may measure turbine (200) restoration force and the secondary measuring device may measure turbine location (or rotational angle), but is not limited to this.

Measuring device (300) may be configured by: electricity meter, voltmeter, ammeter, direction sensor, inertial sensor, strain sensor, acceleration sensor, gravitational acceleration sensor, lidar, solarimeter, UV radiometer, barometer, temperature sensor, humidity sensor, pressure sensor, acceleration sensor, image sensor, optical camera, high speed camera, sound wave sensor, ultrasonic sensor (ultrasonic sensor), acoustic detector, Raman-based distributed temperature sensor, water flow sensor, water pressure sensor, wave meter, but not limited to them.

For example, measuring device (300) may measure pitch angle of turbine (200) using direction sensor or inertial sensor, measure strain rate using strain sensor, measure acceleration using acceleration sensor, measure time and space information of turbine (200) using lidar and image sensors.

For example, each of the strain sensor and the acceleration sensor may be located at the center of a rotor connected to the turbine (200), or may be and may be arranged at regular intervals inside or on the surface of the turbine (200). For example, the UV radiometer, solarimeter, temperature sensor, and humidity sensor can be located in the center of the hub of the rotor.

The at least one measuring device (300) may measure the response of the turbine (200) to the external force, and generate at least one measured value according to the measurement result. The measured values as explained above may include various values, for example, fluid flow exerted against the turbine (200) in wind direction, wind speed, stress, load, displacement, accumulated fatigue life, accumulated amount of ultraviolet rays, residual life time ratio, and/or electrical generation amount, but are not limited thereto.

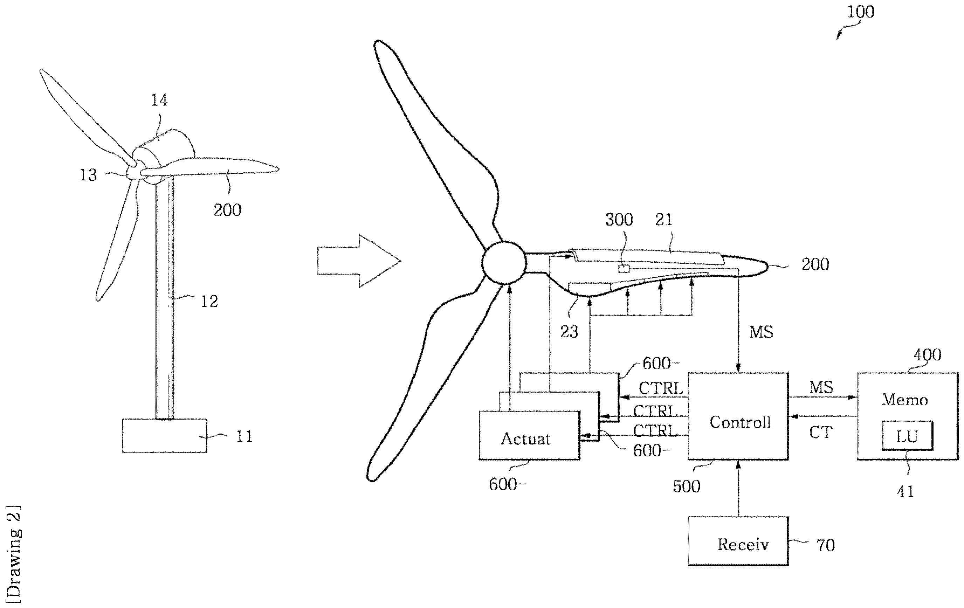

For example, the displacement refers to the degree to which the turbine (200) is bent by fluid flow, and the load refers to the force transmitted perpendicularly to the tower (120) shown in drawing 2, the cumulative fatigue life is the number of times the load is repeated (or the time under which the load is received) until the energy conversion device (100) that is repeatedly subjected to the load until destruction, and the electric generation amount (or power generation amount) may represent the power generation amount of the energy conversion device (100).

The measuring apparatus (300) may measure the wind speed and wind speed applied to the turbine (200) by measuring the revolutions per minute of the turbine (200), and measure the strain and acceleration of the turbine (200) to measure displacement of the turbine (200), may measure the cumulative amount of ultraviolet rays applied to the turbine (200) by measuring the solar radiation and ultraviolet rays on the turbine (200), may measure the cumulative fatigue life of the turbine (200) using stress and load derived by measuring the temperature and humidity of the turbine (200), but are not limited thereto. Here, the measurement may mean calculation.

Wind direction and wind speed can be measured using a wind vane/anemometer installed in the nacelle (140 in drawing 2), the receiver (700) may receive weather information including information about the wind direction and wind speed from a system that provides satellite or weather information.

Turbine (200) made from a composite material is susceptible to ultraviolet rays and the accumulated ultraviolet rays will quickly diminish the lifespan of the turbine (200), and if the cumulative fatigue of the turbine (200) increases, the turbine (200) will weaken and displacement of turbine (200) weakens may increase. Therefore, the controller (500) may calculate the residual lifetime ratio of the turbine (200) by using the above displacement, the cumulative amount of ultraviolet rays, and the cumulative fatigue life. According to actual examples, the measuring device (300) may measure the wind direction and wind speed applied to the turbine (200) by using a wind vane and an anemometer installed in the nacelle (140 of drawing 2).

The memory (400) may store control values capable of changing the three-dimensional shape of the turbine (200). Although drawing 1 illustrates that the memory (400) is arranged outside the controller (500), the memory (400) may be replaced with a cache memory or a data cache located inside the controller (500). The controller (500) may acquire at least one control value (CTV) that represents at least one measured value (MSR) measured from at least one measuring device (300) by accessing the memory (400) arranged either interior or the exterior of the controller (500). The above acquisition may be performed by a read operation or a pre-fetch operation.

For example, it is assumed that the measuring device (300) includes a primary measuring device and a secondary measuring device. The primary measuring device may measure at least one of the following to generate the primary measurement value according to the measurement result: restoration force of the turbine (200), elastic force of the turbine (200), aeroelasticity of the turbine (200), fatigue load of the turbine (200), vibration of the turbine (200), deformation force of the turbine (200), gravity of turbine (200), buoyancy of turbine (200), rotational speed of turbine (200), pitch angle of turbine (200), strain of turbine (200), acceleration of turbine (200), amount of ultraviolet ray of turbine (200), the solar radiation of turbine (200), speed (or density) of the fluid flow applied to the turbine (200), the temperature of turbine (200), and the humidity of turbine (200)

As shown in drawing 4, the secondary measurement device generates a secondary measurement value (BP1 or BP2) according to the measurement result of measuring the position (or rotation angle) of the rotating turbine (200). For example, the measured value (BP1) measured at the primary location has little influence on the power production of the other energy conversion device, and the measured value (BP2) measured at the secondary position may have considerably higher influence on other power conversion devices.

The controller (500) may generate control signal (CTRL) using the primary control value (CTV) by reading (or adopting) any one of the control value (for example the primary control value) among the control values stored in memory (400) by responding to the primary measured value output from the primary measuring apparatus.

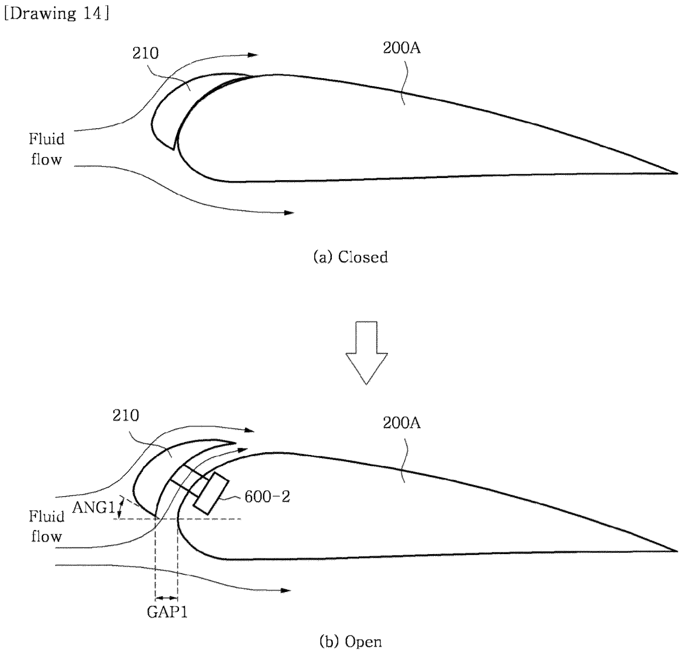

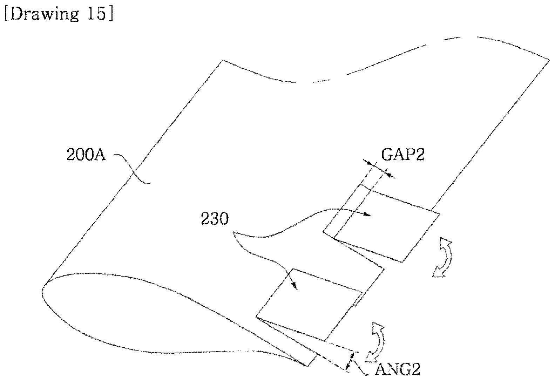

The actuator (600) may control the pitch angle of the turbine (200), trailing edge and/or leading edge attached to the turbine (200) by responding to the control signal (CTRL) output from the controller (500). The actual example that controls the leading edge shall be explained in drawing 14, and the actual example of controlling the trailing edge shall be explained in drawing 15. In other words, the three-dimensional shape of the turbine (200) may be defined by the pitch angle, the leading edge, and/or trailing edge, but is not limited thereto.

The controller (500) may generate control signal (CTRL) using the secondary control value (CTV) read (or adopted) as an alternate control value (for example secondary control value) among the control values stored in memory (400) in response to the secondary measured values output from the secondary measuring device and the primary measured value output from the primary measuring device. At this time, the actuator (600), in reaction to the control signal (CTRL) output from the controller (500), control pitch angle of turbine (200), leading edge and/or trailing edge attached to the turbine (200).

The receiver (700) receives weather information around the energy conversion device (100), terrain information of a location where the energy conversion device (100) is installed, and/or locational information about other energy conversion devices (100), and can send the above weather, terrain, and/or locational information to the controller (500). The controller (500) generates a control value corresponding to the weather information, the terrain information, and/or the locational information, and store the control value in the memory (400).

In other words, each of the control values stored in the memory (400) by the controller (500) has a different value according to at least one of the information among weather information, terrain information, and locational information. According to embodiments, the controller (500) may refer to a processor, a microprocessor, a CPU, or a computing device.

Drawing 2 represents real examples of energy conversion units according to the drawing 1 A wind power generator (100A) according to an embodiment of the energy conversion device (100) of drawing 1 may include a foundation (110), a tower (120), a rotor (130), and a nacelle (140), multiple blades (200A), at least one measurement device (300A), memory (400A), controller (500A), and at least one actuator (600-1, 600-2, and 600-3).

Each blade (200A) corresponds to the turbine (200) of drawing 1, at least one measuring device (300A) corresponds to at least one measuring device (300) of drawing, and memory (400A) corresponds to memory of drawing 1 (400), the controller (500A) corresponds to the controller (500) of drawing 1, and each of the actuators (600-1, 600-2, and 600-3) corresponds to the actuator (600) of drawing 1.

The actuator referenced in this statement may refer to the system (for example, energy conversion apparatus, wind power, generator, tidal and wave generators) or a component of machine that is used to move or control the component 1 elements included in the said system. For example, the actuator may include, but is not limited to, an electric actuator, a hydraulic actuator, and a pneumatic actuator.

Foundation (110) can be installed on the ocean, seabed, or overland. The tower (120) supports the rotor (130) and the nacelle (130) and serves to elevate the rotor (130) and the nacelle (130) to obtain large output from strong wind speed.

The rotor (130) converts wind energy into mechanical energy, and a rotor hub attached to the front end of the rotor (130) serves to support multitude of blades (200A). Each blade (or rotor blade, 200A) acts to rotate the rotor (130) by capturing wind energy. Nacelle (140) is composed of a device for converting the mechanical energy generated by the rotor (130) into electrical energy.

Each blade (200A) may comprise of at least one leading edge (210), at least one trailing edge, and at least one measuring device (300A). In drawing 2, an embodiment in which the measuring device (300A) is arranged on the surface of each blade (200A) is illustrated, however, according to the exemplary embodiments, the measuring device (300A) may be present inside each blade (200A).

The measuring device (300A), when fluid or fluid flow is exerted on the blade (200A) as an external force, measures the reaction of the blade (200A) to this external force (e.g., a direct or indirect reaction), and may generate measured value (MSR) according to the measured result.

The memory (400A) may store each control value corresponding to each measured value (MSR). Each control value may be stored in the form of a lookup table (410), and various forms of the LUT (410) stored in the memory (400A) will be described in detail with reference to drawings 3 to 8. The LUT (410) may store control values (CTV) corresponding to the measured values.

The controller (500A) may generate control signal (CTRL) using control value (CTV) read from any one (or at least one) among the control values stored in the memory (400A) in response to the measured value (MSR) output from the measuring device (300A).

The actuator (600-1, 600-2, or 600-3) may change the three-dimensional shape of the blade (200A) in response to the control signal (CTRL1, CTRL2, or CTRL3) output from the controller (500A). The primary actuator (600-1), which can change the three-dimensional shape of the blade (200A), adjusts the pitch angle of the blade (200A) in response to the primary control signal (CTRL1) to adjust the three-dimensional shape of the blade (200A).

In referencing drawings 2 and 14, the blade (200A) includes at least one leading edge (210). The secondary actuator (600-2) may control at least one of the following in response to the secondary control signal (CTRL2): open and closing of the leading edge (210), gap (GAP1) between the leading edge (210) and the blade (200A), and the angle (ANG1) between the leading edge (210) and the blade (200A). The speed of the fluid flow applied to the blade (200A), the density of the fluid, and/or the direction of the fluid may be changed by the gap (GAP1) or the angle (ANG1), or both.

In reference to drawings 2 and 15, blade (200A) includes at least one trailing edge (230). The third actuator (600-3) may control at least one of the following in response to the third control signal (CTRL3): open or close the trailing edge (230), a gap (GAP2) between the trailing edge (230) and the blade (200A), and the angle (ANG2) between the trailing edge (230) and the blade (200A). The speed of the fluid flow applied to the blade (200A), the density of the fluid, and/or the direction of the fluid may be changed by the gap (GAP2) or the angle (ANG2), or both.

The control of the leading edge (210) and/or the control of the trailing edge (230) may be determined according to a numerical value (eg, a measured value) of the blade (200A)'s response to an external force applied to the blade (200A).

Drawings 3 to 8 represents the real examples of control values and control subjects of drawing 1 or 2 stored in the memory In reference to drawing 3, the measurement object and the measured value measured by the measuring device (300 or 300A) may include, but not limited to, wind direction or wind speed, stress or load, displacement, cumulative fatigue life, cumulative ultraviolet light amount, residual life, and/or electrical production amount. The control object and the control value corresponding to the measurement object and the measured value may be stored in the memory (400 or 400A). According to embodiments, the control object and the control value corresponding to the measurement object and the measurement value may be stored in the memory (400 or 400A) in the form of a first lookup table (LUT1).

For example, when the deformation force of the turbine (200) or the blade (200A) is a response or measured value (MSR), the controller (500 or 500A) may read or select as the control value (CTV) among the primary pitch angle (PA1) representing the primary measured value (MSR=M1), primary leading edge control value (LE1), and/or primary leading edge control value (TE1) from the multitude of control values (PA1, LE1, TE1, PA2, LE2, and TE2) stored in the memory (400 or 400A). In other words, the controller (500 or 500A) may search the control values (PA1, LE1, and/or TE1) corresponding to the primary measurement value (MSR = M1) from the memory (400 or 400A).

In an embodiment, when the cumulative power output (PO2) of the wind generator (200A) is the measured value (MSR), the controller (500A) may read or select the control value (CTV) among the secondary pitch angle (PAS2) representing secondary measured value (MSR=PO2), secondary leading edge control value (LE2), and/or secondary trailing edge control value (TE2) from the multitude of control values (PA1, LE1, TE1, PA2, and LE2) stored in the memory (400A). In other words, the controller (500A) may search the control values (PA2, LE2, and/or TE2) corresponding to the secondary measurement value (MSR = PO2) from the memory (400A).

The controller (500 or 500A) determines the type (or measurement object) of the measuring device (300 or 300A) or the sensor, and may determine how many subjects to control among the control subjects (e.g. pitch angle, leading edge, and trailing edge) according to the results.

The amount of power generated by wind power generator (100A) increases as the wind becomes stronger, but the load applied to the wind power generator (100A) also increases, and the primary lookup table (LUT1) may include control values to limit the maximum generation amount of the wind power generator (100A) in consideration of the wind speed and load. For example, if the wind direction and the wind speed are the primary value (M1), the stress and the load are the secondary value (L1), the displacement is the tertiary value (D1), the cumulative fatigue life is the fourth value (F1), and the cumulative amount of ultraviolet light is the fifth value (U1), the residual lifetime ratio is the sixth value (R1), and the power generation amount is the seventh value (PO1), the controller (500A) may output the primary pitch angle (PA1), the primary leading edge control value (LE1), and/or the primary trailing edge control value (TE1) as the control value (CTV).

In other words, the controller (500 or 500A) may read, select, or search the memory (400 or 400A) for one or more control values using one or more measurement values output from one or more measurement devices.

In reference to drawing 4, the measured object and the measured value measured by the primary measuring device include the restoring force, elastic force, aeroelasticity, fatigue load, vibration, strain force, gravity, buoyancy force, rotational speed, and pitch angle, strain, acceleration, amount of ultraviolet light, insolation, wind speed, temperature, and/or humidity of the blade (200 or 200A), and the measurement object and the measured value measured by the secondary measuring device are assumed to be the locational information of the blades (200 or 200A), but are not limited thereto. As described above, although one measuring device (300 or 300A) is shown in drawings 1 and 2, each measuring device (300 or 300A) collectively are comprised of one or more measuring devices (or sensors). Therefore, each measuring device (300 or 300A) can be understood to include a primary measuring device and a secondary measuring device.

The control object and the control value corresponding to the measurement object and the measured value may be stored in the memory (400 or 400A). According to embodiments, the control object and the control value corresponding to the measurement object and the measurement value may be stored in the memory (400 or 400A) in the form of a secondary lookup table (LUT2). For example, when the deformation force of the blade (200 or 200A) is measured by the primary measuring device and the position of the blade (200 or 200A) is measured by the secondary measuring device, the controller (500 or 500A) may read, select or search the primary pitch angle (PA1-1), the primary leading edge control value (LE1-1), and/or the primary trailing edge control value (TE1-1) corresponding to measured values (M1 and BP1) among the multitude of control values (PA1-1, PA1-2, LE1-1, LE1-2, TE1-1, and Te1-20) stored in memory (400 or 400A) in response to measured values (M1 and BP1) as control values (CTV).

For example, when the deformation force of the blade (200 or 200A) is measured by the primary measuring device and the position of the blade (200 or 200A) is measured by the secondary measuring device, the controller (500 or 500A) may read, select or search the primary pitch angle (PA1-2), the secondary leading edge control value (LE1-2), and/or the secondary trailing edge control value (TE1-1) corresponding to measured values (M1 and BP2) among the multitude of control values (PA1-1, PA1-2, LE1-1, LE1-2, TE1-1, and Te1-20) stored in memory (400 or 400A) in response to measured values (M1 and BP2) as control values (CTV).

The controller (500 or 500A) may generate at least one control signal (CTRL1, CTRL2, and/or CTRL3) in response to the retrieved control values (CTV). Therefore, at least one actuator (600-1, 600-2, and/or 600-3) may control at least one of the following: pitch angle of the blade (200 or 200A), the leading edge (210), and the trailing edge (230). As a result, the three-dimensional shape of the blade (200 or 200A) is changed.

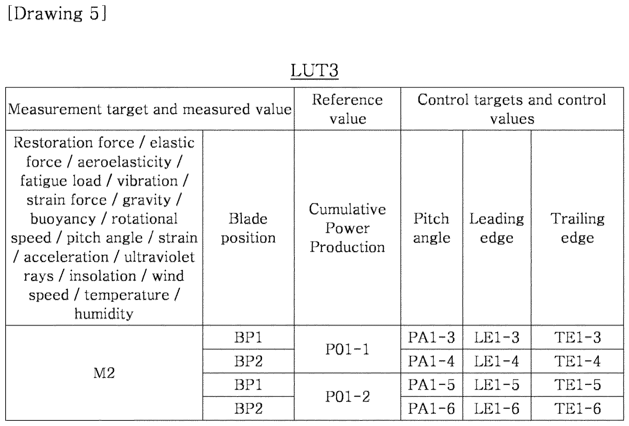

In reference to drawing 5, the measured object and the measured value measured by the primary measuring device include the restoring force, elastic force, aeroelasticity, fatigue load, vibration, strain force, gravity, buoyancy force, rotational speed, and pitch angle, strain, acceleration, amount of ultraviolet light, insolation, wind speed, temperature, and/or humidity of the blade (200 or 200A), and the measurement object and the measured value measured by the secondary measuring device are assumed to be the locational information of the blades (200 or 200A), and the accrued electricity generated amount of energy conversion device (100 or 100A) to be a reference value, but are not limited thereto. It is assumed that the power output is measured by the third measuring device, and the accrued power output is accumulated in the memory (400 or 400A) by the controller (500 or 500A).

As described above, although one measuring device (300 or 300A) is shown in drawings 1 and 2, each measuring device (300 or 300A) collectively are comprised of one or more measuring devices. Therefore, each measuring device (300 or 300A) can be understood to include a primary measuring device, a secondary measuring device, and a third measuring device.

The control object and the control value corresponding to the measurement object, the measured value, and the reference value may be stored in the memory (400 or 400A). According to embodiments, the control object and the control value corresponding to the measurement object, the measurement value, and the reference value may be stored in the memory (400 or 400A) in the form of a third lookup table (LUT3).

For example, when the deformation force of the blades (200 or 200A) is measured by the primary measuring device and the position of the blades (200 or 200A) is measured by the secondary measuring device, and the cumulative power production amount is determined by the primary value (PO1-1), the controller (500 or 500A) may read, select or search the primary pitch angle (PA1-2), the primary leading edge control value (LE1-3), and/or the primary trailing edge control value (TE1-3) among the multitude of control values (PA-1-3~Pa1-6, LE1-3~LE1-6, and TE1-3~TE1-6) stored in the memory (400 or 400A) using measured values (M2 and BP1) and reference value (PO1-1) as control value (CTV).

The controller (500 or 500A) may generate at least one control signal (CTRL1, CTRL2, and/or CTRL3) in response to the retrieved control values (CTV). Therefore, at least one actuator (600-1, 600-2, and/or 600-3) may control at least one of the following: pitch angle of the blade (200 or 200A), the leading edge (210), and the trailing edge (230).

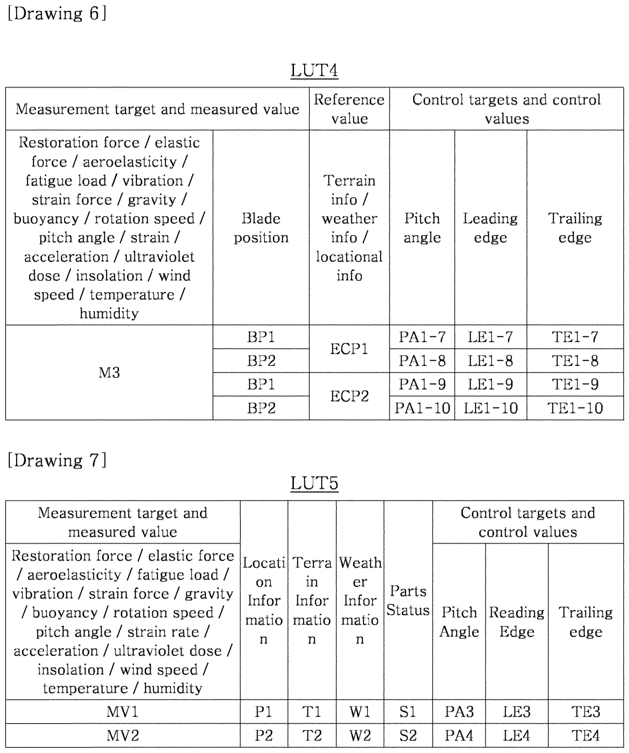

In reference to drawing 6, the measured object and the measured value measured by the primary measuring device include the restoring force, elastic force, aeroelasticity, fatigue load, vibration, strain force, gravity, buoyancy force, rotational speed, and pitch angle, strain, acceleration, amount of ultraviolet light, insolation, wind speed, temperature, and/or humidity of the blade (200 or 200A), and the measurement object and the measured value measured by the secondary measuring device are assumed to be the locational information of the blades (200 or 200A), and at least one of terrain information, weather information, and locational information are assumed to be reference value, but are not limited thereto. The controller (500 or 500A) receives at least one of the terrain information, the weather information, and the location information through the receiver (700), and stores the received information in the memory (400 or 400A).

The control object and the control value corresponding to the measurement object, the measured value, and the reference value may be stored in the memory (400 or 400A). According to embodiments, the control object and the control value corresponding to the measurement object, the measurement value, and the reference value may be stored in the memory (400 or 400A) in the form of a third lookup table (LUT4).

The above terrain information includes information about terrain (topograph or geographical features) in which the energy conversion device (100 or 100A) is installed, and the weather information includes weather information of a place where the energy conversion device (100 or 100A) is installed, and the location information includes information on the location where the energy conversion device (100 or 100A) is installed and/or information on the location where the other energy conversion device is installed.

For example, the elastic force of the blades (200 or 200A) is measured by the primary measuring device, and the position of the blades (200 or 200A) is measured by the secondary measuring device, and at least one of the terrain information, the weather information, and the locational information is assigned to a secondary value (ECP2), the controller (500 or 500A) may read, select or search the fourth pitch angle (PA1-10), the fourth leading edge control value (LE1-10), and/or the fourth trailing edge control value (TE1-10) among the multitude of control values (PA-1-7~Pa1-10, LE1-7~LE1-10, and TE1-7~TE1-10) stored in the memory (400 or 400A) using measured values (M3 and BP2) and reference value (ECP2) as control value (CTV).

The controller (500 or 500A) may generate at least one control signal (CTRL1, CTRL2, and/or CTRL3) in response to the retrieved control values (CTV). Therefore, at least one actuator (600-1, 600-2, and/or 600-3) may control at least one of the following: pitch angle of the blade (200 or 200A), the leading edge (210), and the trailing edge (230).

In reference to drawing 7, the measured object and the measured value measured by the primary measuring device include the restoring force, elastic force, aeroelasticity, fatigue load, vibration, strain force, gravity, buoyancy force, rotational speed, and pitch angle, strain, acceleration, amount of ultraviolet light, insolation, wind speed, temperature, and/or humidity of the blade (200 or 200A), and the measurement object and the measured value measured by the secondary measuring device are assumed to be the status of parts, and at least one of terrain information, weather information, and locational information are assumed to be reference value, but are not limited thereto. The above parts may refer to at least one of the components of, but not limited to, the blade (200 or 200A), the rotor (13), nacelle (140), and/or the tower (120).

The control object and the control value corresponding to the measurement object, the measurement value, the location information, the terrain information, the weather information, and the status of part, may be stored in the memory (400 or 400A). According to embodiments, the control object and the control value corresponding to the measurement object, the measured value, the location information, the terrain information, the weather information, and the status of parts may be stored in the memory (400 or 400A) in the form of a fifth lookup table (LUT5).

For example, when the vibration of the blades (200 or 200A) is measured by the primary measuring device and the status of the parts is measured by the secondary measuring device, the controller (500 or 500A) may read, select or search the primary pitch angle (PA3), the primary leading edge control value (LE3), and/or primary trailing edge control value (TE3) among the multitude of control values (PA3, PA4, LE3, LEA, TE3, and TE4) stored in memory (400 or 400A) using the measured values (MV1 and S1) and reference values (P1, T1 and W1), as control values (CTV).

The controller (500 or 500A) may generate at least one control signal (CTRL1, CTRL2, and/or CTRL3) in response to the retrieved control values (CTV). Therefore, at least one actuator (600-1, 600-2, and/or 600-3) may control at least one of the following: pitch angle of the blade (200 or 200A), the leading edge (210), and the trailing edge (230).

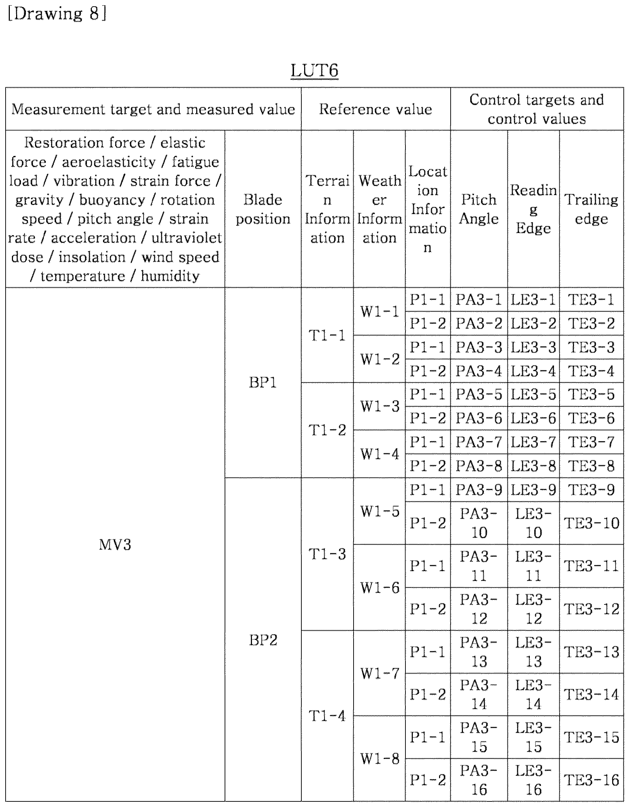

Referring to drawing 8, the control object and the control value corresponding to the measurement object and the measured value, the location information, the terrain information, and the weather information may be stored in the memory (400 or 400A). According to embodiments, the control object and the control value corresponding to the measurement object, the measured value, the location information, the terrain information, and the weather information may be stored in the memory (400 or 400A) in the form of a sixth lookup table (LUT6).

For example, when the rotational speed per minute of the blades (200 or 200A) is measured by the primary measuring device and the position of the blades (200 or 200A) is measured by the secondary measuring device, the controller (500 or 500A) may read, select or search the fourteenth pitch angle (PA3-14), the fourteenth leading edge control value (LE3-14), and/or fourteenth trailing edge control value (TE3-14) among the multitude of control values (PA3-1~ PA3-16, LE3-1~LE3-16, and TE3-1~TE3-16) stored in memory (400 or 400A) using the measured values (MV3 and BP2) and reference values (T1-4, W1-7 and P1-2), as control values (CTV).

The controller (500 or 500A) may generate at least one control signal (CTRL1, CTRL2, and/or CTRL3) in response to the retrieved control values (CTV). Therefore, at least one actuator (600-1, 600-2, and/or 600-3) may control at least one of the following: pitch angle of the blade (200 or 200A), the leading edge (210), and the trailing edge (230).

In reference to drawings 3 to 8, the measurement object, the measurement value, the reference value, and the control object and the control value stored in each lookup table (LUT1 to LUT6, collectively LUT) have been explained, but the controller (500 or 500A) may generate control signal (CTRL1, CTRL2, and/or CTRL3, collectively CTRL) by interpolating control values adjacent values that are not stored in each of the lookup tables (LUT1~LUT6). For example, referring to drawings 2 and 3, when the measured value (MSR) is present between the measured values (M1 and M2), the controller (500 or 500A) may generate primary control signal (CTRL1) by searching pitch angles (PA1 and PA2) corresponding to measured values (M1 and M2), and by storing pitch angles (PA1 and PA2).

Referring back to drawing 2, the primary actuator (600-1) may adjust the pitch angle of the blade (200A) based on the primary control signal (CTRL1).

The pitch angle may increase or decrease the lifting force generated in the blade (200A). For example, as the wind speed increases, the amount of power generated by the wind power generator (100A) increases due to the increase in lift force generated in the blade (200A), but the load applied to the wind generator (100A) also increases. Therefore, in order to alleviate the load and to maintain constant power generation, the pitch angle may be adjusted to reduce the surface area of the blade (200A) that faces the wind.

In reference to drawings 2 and 14, the secondary actuator (600-2) may change the three-dimensional shape of the blade (200A) by controlling the following in response to the secondary control signal (CTRL2): open and closing of the leading edge (210), gap (GAP1) between the leading edge (210) and the blade (200A), and the angle (ANG1) between the leading edge (210) and the blade (200A).

When the wind generator (100A) is located in an area where there is little wind, when the leading edge (210) opens the density of fluid flow between the leading edge (210) and the blade (200A) is increased by the venturi effect, thereby the lift force that the blade (200A) receives increases. Therefore, since the rotational speed of the blade (200A) increases, the leading edge (210) has the effect of increasing the wind around the wind power generator (100A). In addition, as the leading edge (210) opens up further, it has the added benefit of reducing the load to the wind power generator (100A) or the blade (200A). Therefore, unlike when the pitch angle is adjusted, when the lift force is increased, the load of the wind generator (100A) or the blade (200A) decreases.

In reference to drawings 2 and 15, the third actuator (600-3) may change the three-dimensional shape of the blade (200A) by controlling the following based on the third control signal (CTRL3): open and closing of the leading edge (230), gap (GAP2) between the leading edge (230) and the blade (200A), and the angle (ANG2) between the leading edge (230) and the blade (200A).

The higher the speed of the fluid, the more turbulence is generated by the blade (200A). The trailing edge (230) may reduce the turbulence and direct the trailing flow (propeller wash, wake stream, or slip stream) to another wind generator. Therefore, it has the effect of increasing the energy conversion efficiency of the other wind generators.

Although there are four trailing edges (230) illustrated in drawing 2, the technical idea of the present invention is not limited to the arrangement and number of trailing edges (230). In addition, although one leading edge (210) is illustrated in drawing 2, the technical idea of the present invention is not limited to the arrangement and number of leading edges (210).

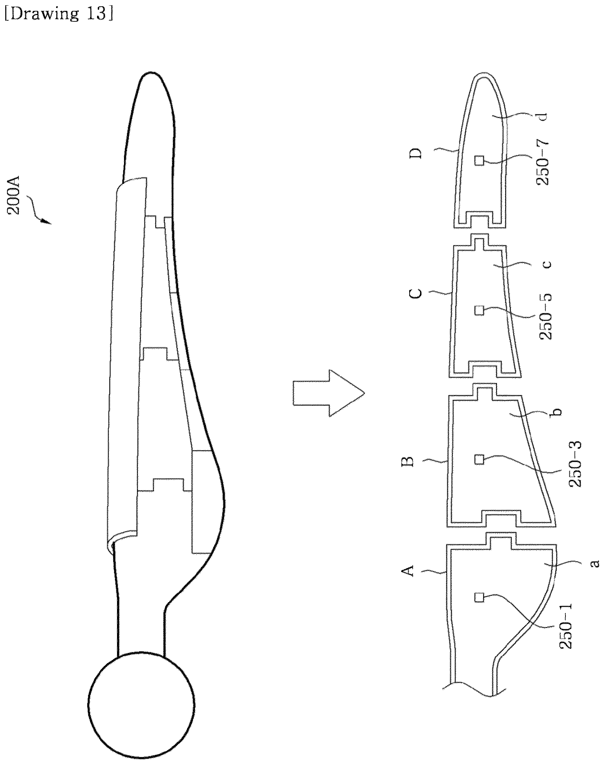

Drawing 13 represents turbine structures of drawings 1, 2, 9, 10 or 12 As shown in drawing 13, blade (200A) includes a multiple of attachable and detachable parts (A, B, C, and D), each of which (A, B, C, and D) may include closed spaces (a, b, c, and d) for storing gas lighter than air or a material having a density less than that of the fluid (air or water) acting externally on the blade 200A.

Therefore, as each closed space (a, b, c, and d) is implemented in the blade (200A), the weight of the blade (200A) is reduced, it has the effect of reducing the load applied to the wind generator (100A). Each of the closed spaces (a, b, c, and d) may include injection ports (250-1, 250-3, 250-5, and 250-7) for injecting the gas or other materials mentioned above.

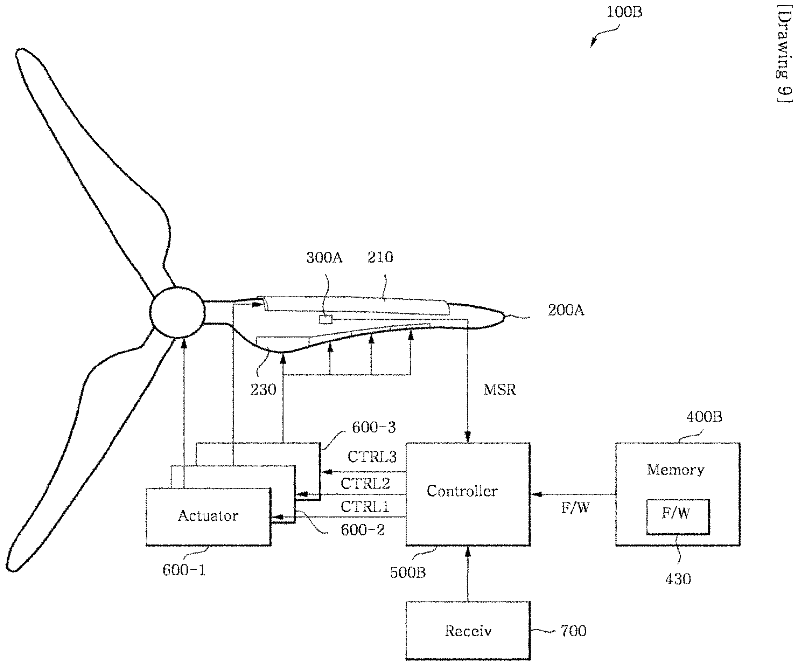

Drawing 9 represents an alternate real examples of energy conversion units according to the drawing 1 In reference to drawing 9, a wind generator (100B) according to another embodiment of the energy conversion device (100) of drawing 1 may include a blade (200A), a measuring device (300A), a memory (400B), a controller (500B), and actuators (600-1, 600-2, and 600-3).

The structure and function of the blade (200A) of drawing 9 is the same as or similar to the structure and function of the blade (200A) of drawing 2, the structure and function of the measuring device (300A) of drawing 9 is similar to the structure and function of measuring device (300A) of drawing 2, and the structure and function of each of the actuators (600-1, 600-2, and 600-3) of drawing 9 are similar to those of the actuators (600-1, 600-2, and 600-3) of drawing 2. The memory (400B) of drawing 9 corresponds to the memory (400A) of drawing 2, and the controller (500B) of drawing 9 corresponds to the controller (500A) of drawing 2.

The memory (400B) may store the fluid dynamics simulation program (430). The controller (500B) may read the fluid dynamic simulation program (430) from the memory (400B) and execute the program (430). The controller (500B) may generate at least one control signal (CTRL1, CTRL2, or CTRL3) corresponding to the measured value (MSR) output from the measuring device (300A) using the fluid dynamics simulation program (430).

The energy conversion device (100B), which converts mechanical energy obtained from the fluid flow into electrical energy, includes the following: blade (200A), measuring device (300A) to measure the blade's response to the fluid flow acting as external force against the blade (200A), controller (500B) that generates at least one control signal (CTRL1, CTRL2, and/or CTRL3) using one or more of the measured values, and at least one actuator (600-1, 600-2, and/or 600-3) that can change the three-dimensional shape of the blade (200A) in response to the output control signal (CTRL1, CLTR2, and/or CTRL3) from the controller (500B). Here, the fluid dynamics simulation program may mean firmware, software, a program, or a simulation program.

The memory (400B) may store a fluid dynamics simulation program, such as a computational fluid dynamics (CFD) program, or finite element method (FEM) software. The controller (500B) executes the CFD program (430) stored in the memory (400B), and may cause to generate at least one control signal (CTRL1, CTRL2, and/or CTRL3) using one or more measured values output from measuring device (300A) through CFD program (430).

The memory (400B) may further store any one of the lookup tables (LUT1 to LUT6) described with reference to drawings 3 to 8 in addition to the fluid dynamics simulation program (430).

The controller (500B) may receive at least one of the following information through the receiver (700): weather information around the energy conversion device (100B), terrain information of the location where the energy conversion device (100B) is installed, and locational information relative to the other energy conversion devices. The fluid dynamics simulation program (430) may generate at least one control signal (CTRL1, CTRL2, and/or CTRL3) using the at least one and one or more measured values output from the measuring device (300A). According to embodiments, the fluid dynamics simulation program (430) may use at least one of the lookup tables (LUT1 to LUT6) stored in the memory (400B) and one or more measurement values output from the measurement device (300A) to generate one or more control signals (CTRL1, CTRL2, and/or CTRL3).

Each of the measurement devices included in the measurement device (300A) may measure the position of one of the measurement objects described above with reference to drawing 4 and the blade (200A), and generate measurement values corresponding to the measurement result. The controller (500B) or the fluid dynamics simulation program (430) may generate at least one control signal (CTRL1, CTRL2, and/or CTRL3) using the measured values output from the measuring devices.

Each actuator (600-1, 600-2, and 600-3) may change the three-dimensional shape of the blade (200A) by controlling the pitch angle of the blade (200A), the leading edge (210), and trailing edge (230) in response to the respective control signals (CTRL1, CTRL2, and CTRL3).

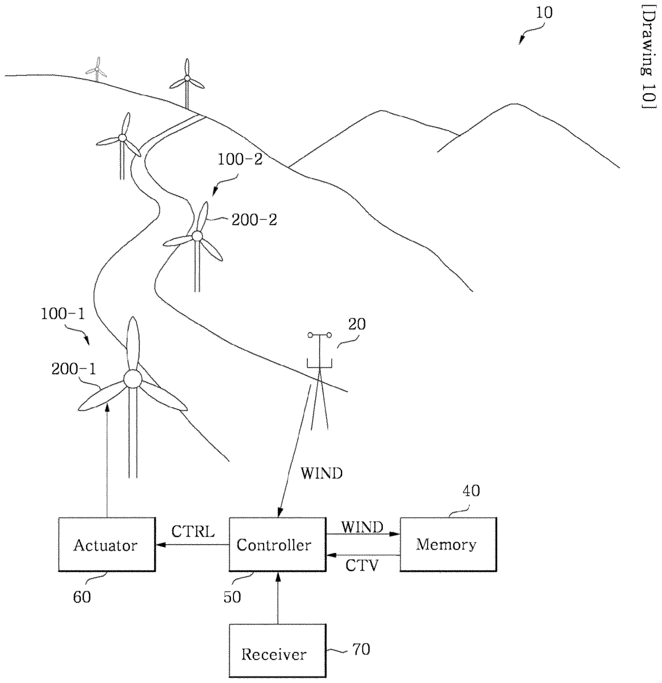

Drawing 10 is a systems diagram of energy conversion units according to the actual examples of this invention. The energy conversion system (10) in drawing 10 may be energy harvesting system that includes multitude of energy conversion devices (eg, wind generators 100-1 and 100-2). The energy conversion system (10) may be an embodiment of a wind farm, which may mean a group of wind turbines (or wind blades) used to produce electricity.

Referring to drawing 10, the energy harvesting system or energy conversion system (10) may include a primary wind power generator (100-1), a secondary wind power generator (100-2), and a measuring device (20). The measuring device (20) refers to a device capable of measuring wind power and speed.

The measuring device (20) may measure wind power, generate wind power values (WIND), and transmit the generated wind power values (WIND) to the controller (50). According to embodiments, weather information (or weather signal) output from the satellite or the lighthouse may be transmitted to the receiver (70).

Except that the measuring device (20) is installed instead of the measuring device (300A), the structure of each wind generator (100-1 and 100-2) is the same as that of the wind generator (100A or 100B) shown in drawings 2 or 9. In other words, each wind generator (100-1 and 100-2) includes a tower, a rotor, a nacelle, and a multitude of blades, each of the multitude of blades having at least one leading edge and/or at least one trailing edge.

Each actuator (600-1, 600-2, and 600-3, collectively 60) for controlling the pitch angle, leading edge (210), and trailing edge (230) of each of the blade, may be included in each wind generator (100-1 and 100-2).

The control center for controlling the operation of each wind generator (100-1 and 100-2) includes a memory (40), a controller (50), and a receiver (70).

The primary wind generator (100-1) includes the primary blades (200-1) and primary actuators, and each of the primary actuators react to each of the actuators (600-1, 600-2, and 600-3), and each of the primary actuators (react to 600-1, 600-2, and 600-3) react to each of the control signals (react to CTRL1, CTRL2 and CTRL3, collectively CTRL3) output from the controller (50) to control each of the pitch angle, leading edge, and trailing edge of the primary blade (200-1) to change the three-dimensional shape of each of the blades (200-1).

The secondary wind generator (100-2) includes the secondary blades (200-2) and secondary actuators, and each of the secondary actuators react to each of the actuators (600-1, 600-2, and 600-3), and each of the secondary actuators (react to 600-1, 600-2, and 600-3) react to each of the control signals (react to CTRL1, CTRL2 and CTRL3, collectively CTRL3) output from the controller (50) to control each of the pitch angle, leading edge, and trailing edge of the secondary blade (200-2) to change the three-dimensional shape of each of the blades (200-2).

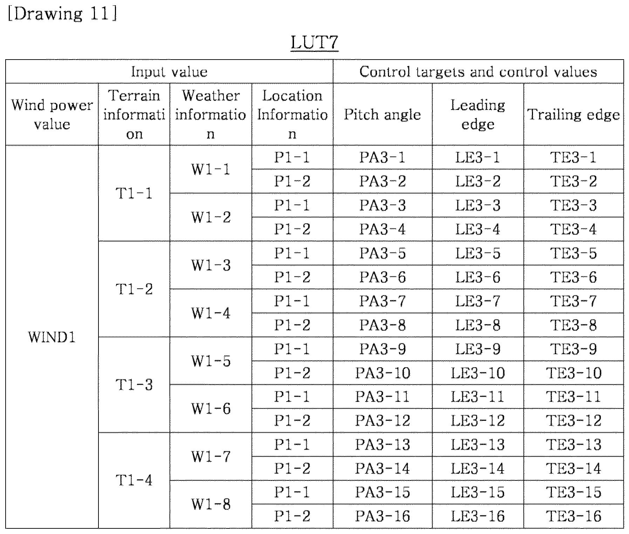

The memory (40) may store a control object and a control value corresponding to the input value to be described with reference to drawing 11.

The controller (50) reads primary control value among control values stored in the memory (40) in response to the wind power value (WIND) output from the measuring device (20), and controls the control signal (CTRL) in response to the read primary control value. At least one of the primary actuators may change the three-dimensional shape of at least one of the primary blades (200-1) in response to the control signal (CTRL) output from the controller (50).

Each of the control values stored in the memory includes at least one independently different value among weather information, terrain information, and locational information of each of the wind generators (100-1 and 100-2).

The controller (50) may store weather information, terrain information, and/or locational information received through the receiver (70) in the memory (40).

One among the primary actuators may change the three-dimensional shape of each of the primary blades (200-1) by adjusting the pitch angle of each of the primary blades (200-1) in response to the control signal (CTRL). Another actuator among the primary actuators may change the three-dimensional shape of each of the primary blades (200-1) by controlling at least one of the following in response to the control signal (CTRL): open and closing of leading edge, the gap between each of the leading edges and the blades (200-1), each of the angles (ANG1) between the leading edges and the blades (200-1).

Yet another actuator among the primary actuators may change the three-dimensional shape of each of the primary blades (200-1) by controlling at least one of the following in response to the control signal (CTRL): open and closing of trailing edge, the gap between each of the trailing edges and the blades (200-1), each of the angles (ANG1) between the trailing edges and the blades (200-1).

Drawing 11 represents the real examples of control values and control subjects of drawing 10 stored in the memory Referring to drawings 10 and 11, the wind power value, the input value, and the control object and the control value may be stored in the memory (40). According to embodiments, the control target and the control value corresponding to the wind power value, locational information, terrain information, and weather information may be stored in the memory (40) in the form of a seventh lookup table (LUT7).

For example, when the wind power value (WIND) output from the measuring device (20) is the primary wind power value (WIND1), the controller (50) may read, select or search the eighth pitch angle (PA3-8), the eighth leading edge control value (LE3-8), and/or eighth trailing edge control value (TE3-8) among the multitude of control values (PA3-1~ PA3-16, LE3-1~LE3-16, and TE3-1~TE3-16) stored in memory (40) using the measured value (WIND1) and the input values (T1-2, W1-4 and P1-2), as control values (CTV).

The controller (50) may generate at least one control signal (CTRL1, CTRL2, and/or CTRL3, collectively CTRL), in response to the retrieved control values (CTV). Therefore, at least one of the primary actuators may control at least one of the pitch angle, the leading edge, and the trailing edge of the primary blade (200-1).

In addition, when the wind power value (WIND) output from the measuring device (20) is the primary wind power value (WIND1), the controller (50) may read, select or search the primary pitch angle (PA3-1), the primary leading edge control value (LE3-1), and/or primary trailing edge control value (TE3-1) among the multitude of control values (PA3-1~ PA3-16, LE3-1~LE3-16, and TE3-1~TE3-16) stored in memory (40) using the measured value (WIND1) and the input values (T1-1, W1-4 and P1-1), as control values (CTV).

The controller (50) may generate at least one control signal (CTRL1, CTRL2, and/or CTRL3, collectively CTRL), in response to the retrieved control values (CTV). Therefore, at least one of the primary actuators may control at least one of the pitch angle, the leading edge, and the trailing edge of the primary blade (200-1).

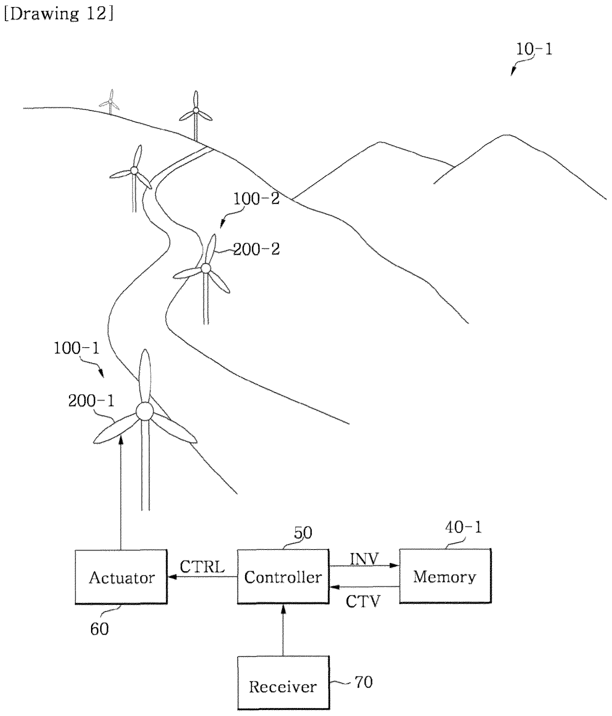

Drawing 12 is a systems diagram of energy conversion units according to the actual examples of this invention. Except for the measuring device (20), the structure and operation of the energy conversion system (10-1) of drawing 12 are the same as or similar to the structure and operation of the energy conversion system (10) of drawing 10.

In addition, the control values stored in the memory (40-1) do not include the wind power value (WIND) measured from the measuring device (20).

The controller (50) may receive at least one (INV) locational information among weather, terrain, and locational information of each wind generators (101-1 and 100-2) and its environment via the receiver (70), and store at least one (INV) to the memory (40-1).

In referencing drawings 11 and 12, the controller (50) may read, select or search the primary pitch angle (PA3-1), the primary leading edge control value (LE3-1), and/or primary trailing edge control value (TE3-1) among the multitude of control values (PA3-1~ PA3-16, LE3-1~LE3-16, and TE3-1~TE3-16) stored in memory (40) using the input values (T1-1, W1-1 and P1-1), as control values (CTV).

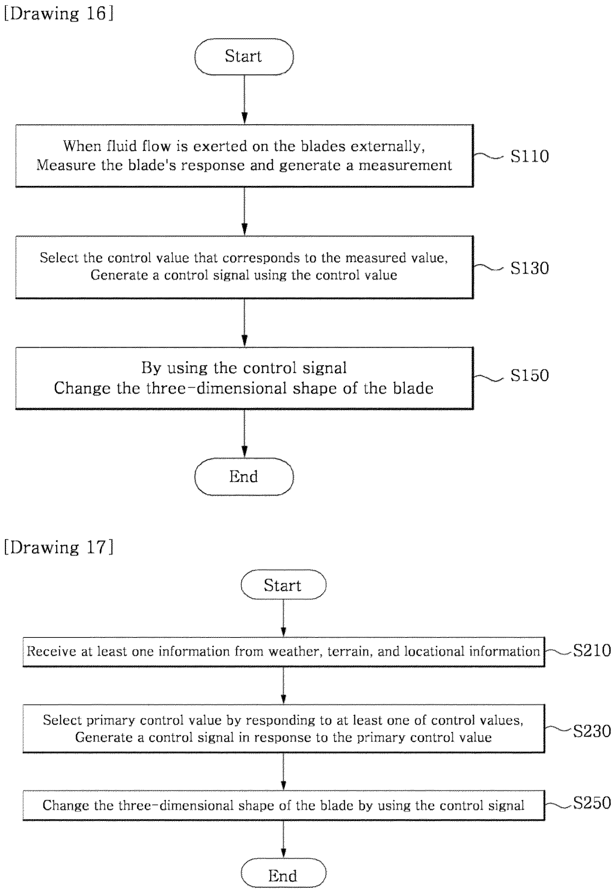

Drawing 16 is a flow chart explaining the operation of energy conversion units in the drawings 1, 2, or 9 Referencing drawings 1, 2, 9, and 16, a method of operating the energy conversion device (100) for converting mechanical energy obtained from a fluid flow into electrical energy is measured by the measurement device (300), when the flow is applied to the blade (200) as an external force, the response of the blade (200) is measured and a measurement value corresponding to the measurement result is generated (S110).

The controller (500) reads primary control value from among control values stored in the memory (400) in response to the measured value output from the measuring device (300), and uses the primary control value to generate the control signal (CTRL)(S130). The actuator (600) changes the three-dimensional shape of the blade (200) in response to the control signal (CTRL) output from the controller (500) (S150).

Each of the control values stored in the memory (400) may include at least one value independently different from one another among the weather information, terrain information, and locational information of other energy conversion devices around the energy conversion device (100).

Drawing 17 is a flow chart explaining the operation of energy conversion system in the drawings 10 or 12 In referencing drawings 10, 12, and 17, the controller (50) receives at least one of weather information, terrain information, and locational information through the receiver (70), and stores at least one of the received information in the memory (40 or 40 -1) (S210).

The controller (50) reads primary control value among control values stored in the memory (40 or 40-1) in response to the at least one, and generates a control signal (CTRL) using the primary control value read (S230). The actuator (60) changes the three-dimensional shape of the blade in response to the control signal (CTRL) output from the controller (50) (S250).

As described with reference to drawings 1 to 17, the energy conversion device (100) for converting the mechanical energy obtained from the fluid flow into electrical energy include a blade (200 or 200A), measuring devices (300), memory (400), controller (500), and actuator (600). The measuring devices (300) measure the response of the blades (200 or 200A) when the fluid flow is exerted on the blades (200 or 200A) and generate measurements corresponding to the results of the measurements.

As described above with reference to drawings 3 through 8 and 11, the memory (400) stores control values corresponding to a combination of primary values representing internal environment of the energy conversion device (100) and secondary values representing external environment of the energy conversion device (100).

The controller (500) generates control signal (CTRL) in response to any one of the control values read from the memory (400) in response to the measured values output from the measuring devices (300).

The actuator (600) changes the three-dimensional shape of the blade (200 or 200A) in response to the control signal (CTRL) output from the controller (500). The memory (400) may be a cache memory embedded in the controller (500).

The internal environment may include at least one, but not limited to the following: the locational information of the blade (200 or 200A), the cumulative generation amount of the energy conversion device (100), the cumulative fatigue life of the blade (200 or 200A), the cumulative amount of ultraviolet light of the blade (200 or 200A), and the residual life of the blade (200 or 200A), and may include internal environmental information as described in drawings 3 through 8.

The controller (500 or 500A) may update each of the control values stored in each lookup table (LUT1 to LUT7) using the internal environment of the energy conversion device (100). For example, the controller (500 or 500A) may update each of the stored control values in each of the lookup tables (LUT1~LUT7) using results of monitoring the state of the components or the cumulative energy generation of the energy conversion device (100), predictive diagnosis technology, artificial intelligence (AI) technology, and context awareness computing technology.

The external environment may include at least one of the following information: primary locational information about the primary location where the energy conversion device (100) is installed, secondary locational information about a secondary location where another energy conversion device (100) is installed, and at least one information between weather and terrain information together with the primary and secondary locational information.

The controller (500 or 500A) may update each of the control values stored in each lookup table (LUT1 to LUT7) by reflecting the external environment. In the present statement, the embodiment of the energy conversion device (100) explains the structure and operation of wind generator (100A, 100B, 100-1, and 100-2), but this invention's technical theory can be applied directly to tidal and wave generators.

Although the present invention has been described with reference to the embodiments illustrated in the drawings, this is merely exemplary, and it will be understood by those skilled in this technology that various modifications and equivalent other embodiments are possible. Therefore, the true technical protection scope of the present invention will be defined by the appended claims.

### Industrial applicability

The present invention can be used in an energy conversion device, wind power generation system including the energy conversion devices, and methods of operating energy conversion devices.

## Claims

1. An energy conversion device (100) for converting mechanical energy obtained from flowing fluid into electrical energy, comprising:
a blade (200);
a primary measuring device for measuring a response of the blade (200) when the fluid flow is applied to the blade (200) by an external force and generating a primary measured value corresponding to the measurement result of the response;
a memory (400) for storing control values including primary control values that represent internal environment of the device and secondary control values that represent external environment of the device;
a controller (500) configured to read a primary control value among the control values within the memory (400) in response to the primary measured value, and to generate control signal using the primary control value; and
an actuator (600) configured to change a three-dimensional shape of the blade (200) in response to the control signal output from the controller (500),
wherein the energy conversion device (100) is configured to measure wind direction and wind speed using a wind vane or anemometer installed in a nacelle, or using a receiver that receives weather information including information about the wind direction and wind speed from a system that provides satellites or the weather information, and
wherein the internal environment including at least one of a cumulative generation amount of the energy conversion device (100), a cumulative fatigue of the blade (200), a cumulative ultraviolet light amount on the blade (200), and a remaining lifespan of the blade (200).

2. The energy conversion device (100) of claim 1, wherein the fluid flow required for energy conversion is wind, tide, ocean or sea current, deep ocean, deep water, river flow, water wave or wind wave.

3. The energy conversion device (100) of claim 1, wherein the aforementioned blade (200) used in the energy conversion device (100) comprises a part that is interchangeable.

4. The energy conversion device (100) of claim 3, wherein the part includes airtight area.

5. The energy conversion device (100) of claim 1, wherein the aforementioned blade (200) used in the energy conversion device comprises a multiple of attachable and detachable parts (A, B, C, and D).

6. The energy conversion device (100) of claim 5, wherein each of the multiple attachable and detachable parts (A, B, C, and D) includes closed space (a, b, c, and d).

7. The energy conversion device (100) of claim 6, wherein the closed space (a, b, c, and d) is for storing gas lighter than air or a material having a density less than that of the fluid acting externally on the blade (200).

8. The energy conversion device (100) of claim 6, wherein the closed space (a, b, c, and d) includes injection ports (250-1, 250-3, 250-5, and 250-7).

9. The energy conversion device (100) of claim 1, wherein the primary measured value includes at least one of a restoration force of the blade (200), an elasticity of the blade (200), an aeroelasticity of the blade (200), a fatigue load of the blade (200), a vibration of the blade (200), a stress of the blade (200), a weight of the blade (200), a buoyancy of the blade, a rotational speed of the blade (200), a pitch angle of the blade (200), a strain of the blade (200), an acceleration of the blade, an amount of ultraviolet light of the blade (200), an amount of solar radiation of the blade (200), a speed of the fluid flow, a temperature of the blade (200), and a relative humidity of the blade (200).

10. The energy conversion device (100) of claim 1, wherein the three-dimensional shape of the blade (200) is defined by a pitch angle of the blade (200), the leading edge (210), and/or the trailing edge (230).

11. The energy conversion device (100) of claim 1, wherein the actuator converts the three-dimensional shape of the blade (200) by adjusting the pitch angle of the blade (200) in response to the control signal.

12. The energy conversion device (100) of claim 1, wherein the blade (200) includes leading edges (210) or trailing edges (230), and wherein the actuator converts the three-dimensional shape of the blade by responding to the control signal by controlling at least one of opening and closing of the leading edge (210) or the trailing edge (230), a gap between the leading edge (210) and the blade (200) or the trailing edge (230) and the blade (200), and an angle between the leading edge (210) and the blade (200) or the trailing edge (230) and the blade (200).

13. The energy conversion device (100) of claim 1, wherein the primary control value contains multiple values independent of each other, and wherein the **controller** (500) stores multiple values independent of each other, and generates the control signal depending on the storage results.

14. The energy conversion device (100) of claim 1, wherein each of the control values stored in the memory (400) has independent values according to at least one of the information comprising weather information around the energy conversion device, terrain information of the location where the energy conversion device is installed, and locational information relative to the other energy conversion devices.

15. The energy conversion device (100) of claim 1,
wherein the external environment includes at least one of a primary location information where the energy conversion device (100) is installed, a secondary location information where a separate energy conversion device is installed, and weather and terrain information of at least one of the primary location and the secondary location.

16. The energy conversion device (100) of claim 1, wherein the memory (400) is adapted to store a fluid dynamics simulation program, such as a computational fluid dynamics, CFD, program or a finite element method, FEM, software, and wherein the controller (500) generates control signal by using primary measured value through CFD program or the FEM software stored in the memory, **and/or** wherein the memory (400) is cache memory contained within the aforementioned controller (500).

17. The energy conversion device (100) of claim 1, further **comprising a secondary wind power generator** including a secondary blade, a receiver that receives at least one of the information of weather and terrain information around the energy conversion device and the locational information of the secondary wind power generator,
wherein the controller is adapted to generate control signal in response to the primary control value that has been selected from the control values in the memory in response to the output of the receiver.

18. A system including the energy conversion device (100) of claim 1 and a secondary wind power generator,
wherein the secondary wind power generator includes:
a secondary blade;
a secondary measuring device for measuring wind power to generate wind power values;
a secondary memory for storing control values; and
a secondary controller configured to generate control signal in response to primary control value that are read among the control values from the memory in response to the wind power values output from the secondary measuring device,
wherein the actuator (600) that changes the three-dimensional shape of the blade (200) in response to the control signal output from the secondary controller.

19. A system including the energy conversion device (100) of claim 1 and a secondary wind power generator,
wherein the secondary wind power generator includes:
a secondary blade;
a secondary memory for storing control values;
a receiver that receives at least one of the information of weather and terrain information around the energy conversion device (100) and the locational information of the secondary wind power generator; and
a secondary controller that generate control signal in response to primary control value that has been selected from the control values in the memory in response to output of the receiver, and
wherein the actuator (600) that changes the three-dimensional shape of the primary blade in response to the control signal output from the secondary controller.

20. A method for converting mechanical energy obtained from flowing fluids into electrical energy, comprising:
measuring, by a primary measuring device, for a response of a blade (200) when the fluid flow is applied to the blade (200) by an external force and generating a primary measured value corresponding to the measurement result of the response;
measuring, by a wind vane or anemometer installed in a nacelle, or using a receiver that receives weather information including information about wind direction and wind speed from a system that provides satellites or the weather information, the wind direction and wind speed;
storing, in a memory (4000), control values including primary values that represent internal environment of the device and secondary values that represent external environment of the device;
reading, by a controller (500), a primary control value among the control values within a memory (400) in response to the primary measured value and the secondary measured value, and to generate control signal using the primary control value; and
changing, by an actuator (600), a three-dimensional shape of the blade (200) in response to the control signal output from the controller (500),
wherein the internal environment including at least one of a cumulative generation amount of the energy conversion device (100), a cumulative fatigue life of the blade (200), a cumulative ultraviolet light amount on the blade (200), and a remaining lifespan of the blade (200).

## Patentansprüche

1. Energieumwandlungsvorrichtung (100) zum Umwandeln von mechanischer Energie, die aus einem strömenden Fluid erhalten wird, in elektrische Energie, wobei die Energieumwandlungsvorrichtung (100) umfasst:
einen Flügel (200);
eine primäre Messvorrichtung zum Messen einer Reaktion des Flügels (200), wenn die Fluidströmung durch eine äußere Kraft auf den Flügel (200) wirkt, und zum Generieren eines primären Messwertes, der dem Messergebnis der Reaktion entspricht;
einen Speicher (400) zum Speichern von Steuerungswerten, einschließlich primärer Steuerungswerte, die eine interne Umgebung der Vorrichtung repräsentieren, und sekundärer Steuerungswerte, die eine externe Umgebung der Vorrichtung repräsentieren;
einen Controller (500), der dafür eingerichtet ist, in Reaktion auf den primären Messwert einen primären Steuerungswert unter den Steuerungswerten innerhalb des Speichers (400) zu lesen und unter Verwendung des primären Steuerungswertes ein Steuersignal zu generieren; und
einen Aktuator (600), der dafür eingerichtet ist, in Reaktion auf das von dem Controller (500) ausgegebene Steuersignal eine dreidimensionale Form des Flügels (200) zu ändern,
wobei die Energieumwandlungsvorrichtung (100) dafür eingerichtet ist, Windrichtung und Windgeschwindigkeit unter Verwendung einer Windfahne oder eines Anemometers, die bzw. das in einer Gondel installiert ist, oder unter Verwendung eines Empfängers, der Wetterinformationen einschließlich Informationen über die Windrichtung und Windgeschwindigkeit von einem System empfängt, das Satelliten oder die Wetterinformationen bereitstellt, zu messen, und
wobei die interne Umgebung mindestens eines von einem kumulativen Generierungsbetrag der Energieumwandlungsvorrichtung (100), einer kumulativen Ermüdung des Flügels (200), einer kumulativen Ultraviolettlichtmenge auf den Flügel (200) und einer Restlebensdauer des Flügels (200) umfasst.

2. Energieumwandlungsvorrichtung (100) nach Anspruch 1, wobei die für die Energieumwandlung erforderliche Fluidströmung Wind, Gezeiten, Ozean- oder Meeresströmung, Tiefsee, Tiefwasser, Flussströmung, Wasserwellen oder Windwellen ist.

3. Energieumwandlungsvorrichtung (100) nach Anspruch 1, wobei der in der Energieumwandlungsvorrichtung (100) verwendete Flügel (200) ein austauschbares Teil umfasst.

4. Energieumwandlungsvorrichtung (100) nach Anspruch 3, wobei das Teil einen luftdichten Bereich aufweist.

5. Energieumwandlungsvorrichtung (100) nach Anspruch 1, wobei der in der Energieumwandlungsvorrichtung verwendete Flügel (200) mehrere anbringbare und abnehmbare Teile (A, B, C und D) umfasst.

6. Energieumwandlungsvorrichtung (100) nach Anspruch 5, wobei jedes der mehreren anbringbaren und abnehmbaren Teile (A, B, C und D) einen geschlossenen Raum (a, b, c und d) aufweist.

7. Energieumwandlungsvorrichtung (100) nach Anspruch 6, wobei der geschlossene Raum (a, b, c und d) zum Speichern von Gas, das leichter ist als Luft, oder eines Materials, dessen Dichte geringer ist als die Dichte des von außen auf den Flügel (200) wirkenden Fluids, vorgesehen ist.

8. Energieumwandlungsvorrichtung (100) nach Anspruch 6, wobei der geschlossene Raum (a, b, c und d) Injektionsports (250-1, 250-3, 250-5 und 250-7) aufweist.

9. Energieumwandlungsvorrichtung (100) nach Anspruch 1, wobei der primäre Messwert mindestens eines von Folgendem umfasst: eine Rückstellkraft des Flügels (200), eine Elastizität des Flügels (200), eine Aeroelastizität des Flügels (200), eine Ermüdungslast des Flügels (200), Vibrationen des Flügels (200), eine mechanische Spannung des Flügels (200), ein Gewicht des Flügels (200), eine Auftriebskraft des Flügels, eine Rotationsgeschwindigkeit des Flügels (200), einen Anstellwinkel des Flügels (200), eine Dehnung des Flügels (200), eine Beschleunigung des Flügels, eine Menge an ultraviolettem Licht auf den Flügel (200), eine Menge an Sonneneinstrahlung auf den Flügel (200), eine Geschwindigkeit der Fluidströmung, eine Temperatur des Flügels (200) und eine relative Feuchtigkeit des Flügels (200).

10. Energieumwandlungsvorrichtung (100) nach Anspruch 1, wobei die dreidimensionale Form des Flügels (200) von einem Anstellwinkel des Flügels (200), der Vorderkante (210) und/oder der Hinterkante (230) definiert ist.

11. Energieumwandlungsvorrichtung (100) nach Anspruch 1, wobei der Aktuator die dreidimensionale Form des Flügels (200) durch Verstellen des Anstellwinkels des Flügels (200) in Reaktion auf das Steuersignal umwandelt.

12. Energieumwandlungsvorrichtung (100) nach Anspruch 1, wobei der Flügel (200) Vorderkanten (210) oder Hinterkanten (230) aufweist, und wobei der Aktuator die dreidimensionale Form des Flügels durch Reagieren auf das Steuersignal umwandelt, indem er mindestens eines von Folgendem steuert: Öffnen und Schließen der Vorderkante (210) oder der Hinterkante (230), einen Spalt zwischen der Vorderkante (210) und dem Flügel (200) oder der Hinterkante (230) und dem Flügel (200) und einen Winkel zwischen der Vorderkante (210) und dem Flügel (200) oder der Hinterkante (230) und dem Flügel (200).

13. Energieumwandlungsvorrichtung (100) nach Anspruch 1, wobei der primäre Steuerungswert mehrere voneinander unabhängige Werte aufweist, und wobei der Controller (500) mehrere voneinander unabhängige Werte speichert und das Steuersignal in Abhängigkeit von den Speicherergebnissen generiert.

14. Energieumwandlungsvorrichtung (100) nach Anspruch 1, wobei jeder der in dem Speicher (400) gespeicherten Steuerungswerte unabhängige Werte gemäß mindestens einer der Informationen aufweist, die umfassen: Wetterinformationen in der Umgebung der Energieumwandlungsvorrichtung, Geländeinformationen über den Standort, an dem die Energieumwandlungsvorrichtung installiert ist, und Standortinformationen in Bezug auf die anderen Energieumwandlungsvorrichtungen.

15. Energieumwandlungsvorrichtung (100) nach Anspruch 1, wobei die externe Umgebung mindestens eine von Folgenden umfasst: eine Primärstandortinformation, wo die Energieumwandlungsvorrichtung (100) installiert ist, eine Sekundärstandortinformation, wo eine separate Energieumwandlungsvorrichtung installiert ist, und Wetter- und Geländeinformationen von mindestens einem des primären Standorts und des sekundären Standorts.

16. Energieumwandlungsvorrichtung (100) nach Anspruch 1, wobei der Speicher (400) dafür ausgelegt ist, ein Fluiddynamiksimulationsprogramm, wie zum Beispiel ein Numerisches-Strömungsmechanik (Computational Fluid Dynamics, CFD)-Programm oder eine Finite-Elemente-Methode (FEM)-Software, zu speichern, und wobei der Controller (500) ein Steuersignal unter Verwendung eines primären Messwertes durch das CFD-Programm oder die FEM-Software, die in dem Speicher gespeichert sind, generiert, und/oder wobei der Speicher (400) ein Cache-Speicher ist, der innerhalb des Controllers (500) enthalten ist.

17. Energieumwandlungsvorrichtung (100) nach Anspruch 1, des Weiteren umfassend einen sekundären Windkraftgenerator, der einen sekundären Flügel und einen Empfänger aufweist, der mindestens eine der Informationen über Wetter- und Geländeinformationen in der Umgebung der Energieumwandlungsvorrichtung und der Standortinformationen des sekundären Windkraftgenerators empfängt,
wobei der Controller dafür ausgelegt ist, ein Steuersignal in Reaktion auf den primären Steuerungswert zu generieren, der aus den Steuerungswerten in dem Speicher in Reaktion auf die Ausgabe des Empfängers ausgewählt wurde.

18. System, aufweisend die Energieumwandlungsvorrichtung (100) nach Anspruch 1 und einen sekundären Windkraftgenerator, wobei der sekundäre Windkraftgenerator aufweist:
einen sekundären Flügel;
eine sekundäre Messvorrichtung zum Messen der Windkraft, um Windkraftwerte zu generieren;
einen sekundären Speicher zum Speichern von Steuerungswerten; und
einen sekundären Controller, der dafür eingerichtet ist, ein Steuersignal in Reaktion auf einen primären Steuerungswert zu generieren, der in Reaktion auf die von der sekundären Messvorrichtung ausgegebenen Windkraftwerte unter den Steuerungswerten aus dem Speicher gelesen wird,
wobei der Aktuator (600) die dreidimensionale Form des Flügels (200) in Reaktion auf das von dem sekundären Controller ausgegebene Steuersignal ändert.

19. System, aufweisend die Energieumwandlungsvorrichtung (100) nach Anspruch 1 und einen sekundären Windkraftgenerator, wobei der sekundäre Windkraftgenerator aufweist:
einen sekundären Flügel;
einen sekundären Speicher zum Speichern von Steuerungswerten;
einen Empfänger, der mindestens eine der Informationen über Wetter- und Geländeinformationen in der Umgebung der Energieumwandlungsvorrichtung (100) und der Standortinformationen des sekundären Windkraftgenerators empfängt; und
einen sekundären Controller, der ein Steuersignal in Reaktion auf den primären Steuerungswert generiert, der aus den Steuerungswerten in dem Speicher in Reaktion auf die Ausgabe des Empfängers ausgewählt wurde, und
wobei der Aktuator (600) die dreidimensionale Form des primären Flügels in Reaktion auf das von dem sekundären Controller ausgegebene Steuersignal ändert.

20. Verfahren zum Umwandeln von mechanischer Energie, die aus einem strömenden Fluid erhalten wird, in elektrische Energie, wobei das Verfahren umfasst:
Messen, durch eine primäre Messvorrichtung, einer Reaktion eines Flügels (200), wenn die Fluidströmung durch eine äußere Kraft auf den Flügel (200) wirkt, und zum Generieren eines primären Messwertes, der dem Messergebnis der Reaktion entspricht;
Messen, durch eine Windfahne oder ein Anemometer, die bzw. das in einer Gondel installiert ist, oder unter Verwendung eines Empfängers, der Wetterinformationen einschließlich Informationen über Windrichtung und Windgeschwindigkeit von einem System, das Satelliten oder die Wetterinformationen bereitstellt, der Windrichtung und Windgeschwindigkeit;
Speichern, in einem Speicher (4000), von Steuerungswerten, einschließlich primärer Werte, die eine interne Umgebung der Vorrichtung repräsentieren, und sekundärer Werte, die eine externe Umgebung der Vorrichtung repräsentieren;
Lesen, durch einen Controller (500), eines primären Steuerungswertes unter den Steuerungswerten innerhalb eines Speichers (400) in Reaktion auf den primären Messwert und den sekundären Messwert und Generieren eines Steuersignals unter Verwendung des primären Steuerungswertes; und Ändern, durch einen Aktuator (600), einer dreidimensionalen Form des Flügels (200) in Reaktion auf das von dem Controller (500) ausgegebene Steuersignal,
wobei die interne Umgebung mindestens eines von einem kumulativen Generierungsbetrag der Energieumwandlungsvorrichtung (100), einer kumulativen Ermüdungslebensdauer des Flügels (200), einer kumulativen Ultraviolettlichtmenge auf den Flügel (200) und einer Restlebensdauer des Flügels (200) umfasst.

## Revendications

1. Dispositif de conversion d'énergie (100) pour convertir de l'énergie mécanique obtenue à partir d'un fluide qui s'écoule en énergie électrique, comprenant :
une pale (200) ;
un dispositif de mesure primaire pour mesurer une réponse de la pale (200) lorsque l'écoulement de fluide est agit sur la pale (200) par une force externe et pour générer une valeur mesurée primaire correspondant au résultat de mesure de la réponse ;
une mémoire (400) pour stocker des valeurs de commande comportant des valeurs de commande primaires qui représentent un environnement interne du dispositif et des valeurs de commande secondaires qui représentent un environnement externe du dispositif ;
une commande (500) configurée pour lire une valeur de commande primaire parmi les valeurs de commande à l'intérieur de la mémoire (400) en réponse à la valeur mesurée primaire, et pour générer un signal de commande utilisant la valeur de commande primaire ; et
un actionneur (600) configuré pour changer une forme tridimensionnelle de la pale (200) en réponse au signal de commande délivré à la sortie de la commande (500),
dans lequel le dispositif de conversion d'énergie (100) est configuré pour mesurer une direction du vent et une vitesse du vent en utilisant une girouette ou un anémomètre installé dans une nacelle, ou en utilisant un récepteur qui reçoit des informations météorologiques comportant des informations concernant la direction du vent et la vitesse du vent provenant d'un système qui fournit des satellites ou les informations météorologiques, et
dans lequel l'environnement interne comporte au moins une parmi une quantité cumulée de génération du dispositif de conversion d'énergie (100), une fatigue cumulée de la pale (200), une quantité cumulée de lumière ultraviolette sur la pale (200), et une durée de vie restante de la pale (200) .

2. Dispositif de conversion d'énergie (100) selon la revendication 1, dans lequel l'écoulement de fluide nécessaire à la conversion d'énergie est un vent, une marée, un courant océanique ou marin, un océan profond, des eaux profondes, un écoulement de rivière, une vague d'eau ou une vague de vent.

3. Dispositif de conversion d'énergie (100) selon la revendication 1, dans lequel ladite pale (200) utilisée dans le dispositif de conversion d'énergie (100) comprend une partie qui est interchangeable.

4. Dispositif de conversion d'énergie (100) selon la revendication 3, dans lequel la partie comporte une zone étanche à l'air.

5. Dispositif de conversion d'énergie (100) selon la revendication 1, dans lequel ladite pale (200) utilisée dans le dispositif de conversion d'énergie comprend une pluralité de parties attachables et détachables (A, B, C et D) .

6. Dispositif de conversion d'énergie (100) selon la revendication 5, dans lequel chacune de la pluralité de parties attachables et détachables (A, B, C et D) comporte un espace fermé (a, b, c et d).

7. Dispositif de conversion d'énergie (100) selon la revendication 6, dans lequel l'espace fermé (a, b, c et d) est destiné à stocker un gaz plus léger que l'air ou un matériau ayant une densité inférieure à celle du fluide agissant extérieurement sur la pale (200).

8. Dispositif de conversion d'énergie (100) selon la revendication 6, dans lequel l'espace fermé (a, b, c et d) comporte des orifices d'injection (250-1,250-3, 250-5 et 250-7) .

9. Dispositif de conversion d'énergie (100) selon la revendication 1, dans lequel la valeur mesurée primaire comprend au moins un parmi une force de rappel de la pale (200), une élasticité de la pale (200), une aéroélasticité de la pale (200), une charge de fatigue de la pale (200), une vibration de la pale (200), une contrainte de la pale (200), un poids de la pale (200), une flottabilité de la pale (200), une vitesse de rotation de la pale (200), un angle de calage de la pale (200), une déformation de la pale (200), une accélération de la pale, une quantité de lumière ultraviolette de la pale (200), une quantité de rayonnement solaire de la pale (200), une vitesse d'écoulement de fluide, une température de la pale (200), et une humidité relative de la pale (200).

10. Dispositif de conversion d'énergie (100) selon la revendication 1, dans lequel la forme tridimensionnelle de la pale (200) est définie par un angle de calage de la pale (200), le bord d'attaque (210) et/ou le bord de fuite (230) .

11. Dispositif de conversion d'énergie (100) selon la revendication 1, dans lequel l'actionneur convertit la forme tridimensionnelle de la pale (200) en réglant l'angle de calage de la pale (200) en réponse au signal de commande.

12. Dispositif de conversion d'énergie (100) selon la revendication 1, dans lequel la pale (200) comporte des bords d'attaque (210) ou des bords de fuite (230), et dans lequel l'actionneur convertit la forme tridimensionnelle de la pale en répondant au signal de commande en commandant au moins un parmi une ouverture et une fermeture du bord d'attaque (210) ou du bord de fuite (230), un interstice entre le bord d'attaque (210) et la pale (200) ou le bord de fuite (230) et la pale (200), et un angle entre le bord d'attaque (210) et la pale (200) ou le bord de fuite (230), et la pale (200).

13. Dispositif de conversion d'énergie (100) selon la revendication 1, dans lequel la valeur de commande primaire contient une pluralité de valeurs indépendantes les unes des autres, et dans lequel la commande (500) stocke une pluralité de valeurs indépendantes les unes des autres, et génère le signal de commande en fonction des résultats de stockage.

14. Dispositif de conversion d'énergie (100) selon la revendication 1, dans lequel chacune des valeurs de commande stockées dans la mémoire (400) a des valeurs indépendantes en fonction d'au moins une des informations comprenant des informations météorologiques autour du dispositif de conversion d'énergie, des informations de terrain de l'emplacement où le dispositif de conversion d'énergie est installé, et des informations de localisation par rapport à d'autres dispositifs de conversion d'énergie.

15. Dispositif de conversion d'énergie (100) selon la revendication 1,
dans lequel l'environnement externe comporte au moins une parmi une information d'emplacement primaire où le dispositif de conversion d'énergie (100) est installé, une information d'emplacement secondaire où un dispositif de conversion d'énergie séparé est installé, et des informations météorologiques et des informations de terrain d'au moins un emplacement parmi l'emplacement primaire et l'emplacement secondaire.

16. Dispositif de conversion d'énergie (100) selon la revendication 1, dans lequel la mémoire (400) est adaptée pour stocker un programme de simulation de dynamique des fluides, tel qu'un programme de dynamique des fluides numérique (Computational Fluid Dynamics, CFD) ou un logiciel d'analyse par éléments finis Finite-Elemente-Methode (FEM), et dans lequel la commande (500) génère un signal de commande en utilisant une valeur mesurée primaire via le programme CFD ou le logiciel FEM stocké dans la mémoire, et/ou dans lequel la mémoire (400) est une mémoire cache contenue à l'intérieur de ladite commande (500).

17. Dispositif de conversion d'énergie (100) selon la revendication 1, comprenant en outre un générateur électrique éolien secondaire comportant une pale secondaire, un récepteur qui reçoit au moins une parmi des informations météorologiques et des informations de terrain autour du dispositif de conversion d'énergie et les informations de localisation du générateur électrique éolien secondaire,
dans lequel la commande est adaptée pour générer un signal de commande en réponse à la valeur de commande primaire qui a été sélectionnée parmi les valeurs de commande dans la mémoire en réponse à la sortie du récepteur.

18. Système comportant le dispositif de conversion d'énergie (100) selon la revendication 1 et un générateur électrique éolien secondaire,
dans lequel le générateur électrique éolien secondaire comporte :
une pale secondaire ;
un dispositif de mesure secondaire pour mesurer de l'énergie éolienne afin de générer des valeurs d'énergie éolienne ;
une mémoire secondaire pour stocker des valeurs de commande ; et
une commande secondaire configurée pour générer un signal de commande en réponse à une valeur de commande primaire qui est lue parmi les valeurs de commande provenant de la mémoire en réponse aux valeurs d'énergie éolienne délivrées à la sortie du dispositif de mesure secondaire,
dans lequel l'actionneur (600) change la forme tridimensionnelle de la pale (200) en réponse au signal de commande délivré à la sortie de la commande secondaire.

19. Système comportant le dispositif de conversion d'énergie (100) selon la revendication 1 et un générateur électrique éolien secondaire,
dans lequel le générateur électrique éolien secondaire comporte :
une pale secondaire ;
une mémoire secondaire pour stocker des valeurs de commande ;
un récepteur qui reçoit au moins une parmi des informations météorologiques et des informations de terrain autour du dispositif de conversion d'énergie (100) et les informations de localisation du générateur électrique éolien secondaire ; et
une commande secondaire qui génère un signal de commande en réponse à une valeur de commande primaire qui a été sélectionnée parmi les valeurs de commande dans la mémoire en réponse à une sortie du récepteur, et
dans lequel l'actionneur (600) change la forme tridimensionnelle de la pale primaire en réponse au signal de commande délivré à la sortie de la commande secondaire.

20. Procédé pour convertir de l'énergie mécanique obtenue à partir de fluides en écoulement en énergie électrique, comprenant de :
mesurer, par un dispositif de mesure primaire, une réponse d'une pale (200) lorsque l'écoulement de fluide agit sur la pale (200) par une force externe et générer une valeur mesurée primaire correspondant au résultat de mesure de la réponse ;
mesurer, par une girouette ou un anémomètre installé dans une nacelle, ou en utilisant un récepteur qui reçoit des informations météorologiques comportant des informations concernant une direction du vent et une vitesse du vent provenant d'un système qui fournit des satellites ou les informations météorologiques, la direction du vent et la vitesse du vent ;
stocker, dans une mémoire (4000), des valeurs de commande comportant des valeurs primaires qui représentent un environnement interne du dispositif et des valeurs secondaires qui représentent un environnement externe du dispositif ;
lire, par une commande (500), une valeur de commande primaire parmi les valeurs de commande à l'intérieur d'une mémoire (400) en réponse à la valeur mesurée primaire et à la valeur mesurée secondaire, et générer un signal de commande en utilisant la valeur de commande primaire ; et
changer, par un actionneur (600), une forme tridimensionnelle de la pale (200) en réponse au signal de commande délivré à la sortie de la commande (500),
dans lequel l'environnement interne comporte au moins une parmi une quantité cumulée de génération du dispositif de conversion d'énergie (100), une durée de fatigue cumulée de la pale (200), une quantité cumulée de lumière ultraviolette sur la pale (200), et une durée de vie restante de la pale (200).
